# EUROPÄISCHE PATENTSCHRIFT

(11) **EP 0 677 325 B1**
(45) Veröffentlichungstag und Bekanntmachung des Hinweises auf die Patenterteilung: **14.10.1998**
(21) Anmeldenummer: 95103814.0
(22) Anmeldetag: 16.03.1995
(51) Int. Cl.: B01J 2/08, B01L 3/02, G01F 11/02

(54) **Verfahren und Einrichtung zur Herstellung von Kugeln aus keramischem Material**
Process and apparatus for producing ceramic balls
Procédé et dispositif pour la préparation de billes en matière céramique

(30) Priorität: 14.04.1994 US 227329
(43) Veröffentlichungstag der Anmeldung: 18.10.1995
(73) Patentinhaber: ZIRCOA, INC., Solon Ohio 44139 (US)
(72) Erfinder: Herbert, Johns L., in Firma, Zircoa Inc., Solon, Ohio 44139 (US)
(74) Vertreter: Brückner, Raimund, Dipl.-Ing.

(56) Entgegenhaltungen:
- EP-A- 0 001 023
- DE-A- 2 411 745
- US-A- 3 558 508
- DATABASE WPI Week 9235 Derwent Publications Ltd., London, GB; AN 92-290304 & JP-A-04 200 735 (SHINAGAWA FIRE BRICK) , 21.Juli 1992
- PATENT ABSTRACTS OF JAPAN vol. 17 no. 355 (C-1079) ,6.Juli 1993 & JP-A-05 049899 (JAPAN TOBACCO INC.) 2.März 1993,

## Beschreibung

Die Erfindung betrifft ein Verfahren zur Herstellung von Kugeln aus keramischem Material, wobei das Material in fließfähigem Zustand als Schlicker aus einem Schlicker-Vorratsbehälter zu wenigstens einer Düse gefördert wird und aus dieser tropfenweise in eine Lösung gelangt, in der es unter Gelieren absinkt.

Weiterhin betrifft die Erfindung eine Einrichtung zur Durchführung des Verfahrens.

Solche Kugeln eignen sich beispielsweise für Kugelschreiberminen.

In der US-PS 4 621 936 ist ein derartiges Verfahren beschrieben. Bei der US-PS 4 621 936 ist der herstellbare Kugeldurchmesser abhängig vom Durchmesser der Düse. Um unterschiedliche Kugeldurchmesser zu erreichen, müssen die Düsen ausgetauscht werden. Dies ist aufwendig. Außerdem lassen sich beim Tropfverfahren nach der US-PS 4 621 936 nur Kugeldurchmesser unter 3,5 mm erreichen.

Kugeln größerer Durchmesser lassen sich in bekannten Preßverfahren herstellen. Dabei besteht jedoch der Nachteil, daß gepreßte Kugeln weniger rund sind als getropfte Kugeln. Gepreßte Kugeln müssen deshalb nachgeschliffen werden, wenn hohe Anforderungen an ihre Rundheit gestellt sind.

In dem Tropfverfahren und in dem Preßverfahren werden üblicherweise mehrere Kugeln gleichzeitig geformt. Dennoch ist die Herstellungsgeschwindigkeit in beiden Fällen beschränkt. Beim Tropfverfahren nach der US-PS 4 621 936 läßt sich die Tropfgeschwindigkeit nicht einfach erhöhen, da diese auch Einfluß auf den Kugeldurchmesser hat. Beim Preßverfahren ist die Geschwindigkeit durch den Ablauf des Preßvorgangs begrenzt.

Aufgabe der Erfindung ist es, ein Verfahren und eine Einrichtung der eingangs genannten Art vorzuschlagen, wobei in einfacher Weise größere und kleinere Kugeldurchmesser gewählt werden können und ein hoher Grad der Rundheit der Kugeln erreicht wird.

Erfindungsgemäß ist obige Aufgabe bei einem Verfahren der eingangs genannten Art dadurch erreicht, daß Schlicker aus dem Vorratsbehälter in einen Zylinder einer Zylinder-Druckkolbenanordnung eingebracht wird und daß der Druckkolben in einem Hub eine dem gewünschten Kugeldurchmesser entsprechende Materialmenge durch die Düse ausdrückt.

Der Hub des Druckkolbens bestimmt die ausgedrückte Materialmenge und damit den Durchmesser der zu fertigenden Kugel. Wird der Hub größer eingestellt, dann ergeben sich entsprechend größere Kugeln als bei kleinerem Hub. Die Hubverstellung ist auf einfache Weise möglich.

Es hat sich gezeigt, daß durch das beschriebene Verfahren Kugeln größeren Durchmessers als bei dem bekannten Tropfverfahren herstellbar sind. Es lassen sich beispielsweise Kugeln mit einem Durchmesser zwischen 3 mm bis 12 mm fertigen.

Die ausgedrückte Materialmenge nimmt bei der Düse, auf der Fallstrecke zu der Lösung und in der Lösung, Kugelform an. Dadurch ist ein hoher Grad der Rundheit der Kugeln gewährleistet.

Mit dem Verfahren ist auch eine hohe Herstellungsgeschwindigkeit erreichbar. Diese hängt von der Geschwindigkeit der Bewegung des Druckkolbens ab. Die Bewegungsgeschwindigkeit des Druckkolbens läßt sich einfach vergrößern.

Eine Einrichtung zur Herstellung von Kugeln aus einem keramischen Material, die zwischen einem Schlicker-Vorratsbehälter und einem Eintropfgefäß angeordnet ist, und bei der Schlicker tropfenweise durch eine Düse in eine Lösung des Eintropfgefässes gelangt, zeichnet sich zur Lösung der gestellten Aufgabe dadurch aus, daß wenigstens eine Zylinder-Druckkolbenanordnung vorgesehen ist, deren Zylinder aus dem Schlicker-Vorratsbehälter nachführbar ist und deren Druckkolben von einem Antriebsglied in einem wählbaren Hub beweglich ist, durch den er die einen gewünschten Kugeldurchmesser entsprechende Materialmenge aus dem Zylinder durch die Düse ausdrückt. Diese Einrichtung bringt die oben genannten Vorteile mit sich.

Als Antriebsglied eignet sich insbesondere eine rotierende Kurvenscheibe. Der Hub des Druckkolbens ist dabei durch die Kurvenkontur der Kurvenscheibe bestimmt. Durch ein Auswechseln der Kurvenscheibe lassen sich leicht andere Hübe einstellen.

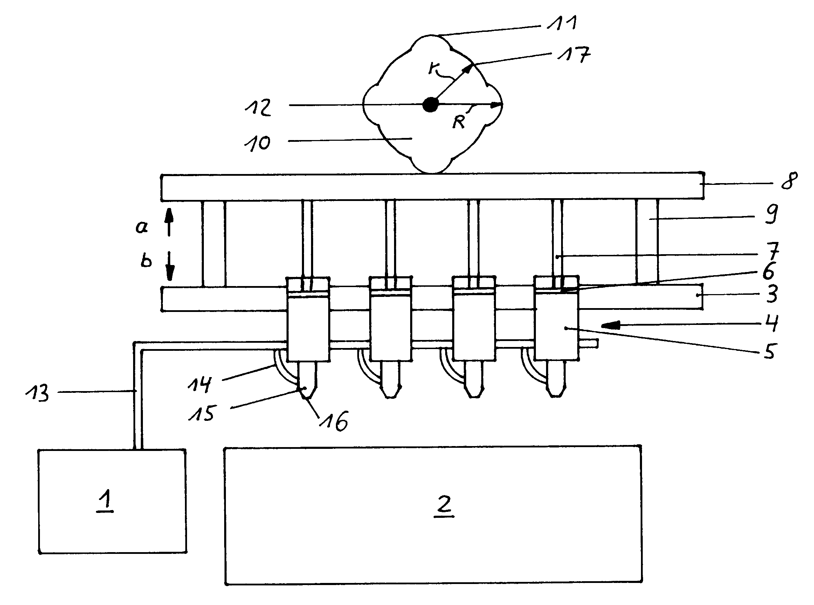

Weitere vorteilhafte Ausgestaltungen der Erfindung ergeben sich aus den Unteransprüchen und der folgenden Beschreibung. Die Figur zeigt eine Einrichtung zur Herstellung von Kugeln aus keramischem Material.

Es ist ein Vorratsbehälter(1) vorgesehen, der einen Schlicker aus keramischem Material enthält. Der Schlicker enthält im wesentlichen Zirkonoxid, Magnesiumhydroxid, Wasser und Ammoniumalginat etwa in folgender Zusammensetzung:
- 75,3: Gew.-% Zirkonoxid
- 2,3: Gew,-% Magnesiumhydroxid
- 21 %: Wasser
- 0,6: Gew.-% Ammoniumalginat.

Er hat ein Viskosität von etwa 940 Poise.

Außerdem ist ein Eintropfgefäß(2) vorgesehen, das eine wässrige Lösung von CaCL₂ enthält. Die Zusammensetzung ist etwa:
- 30 %: CaCL₂
- 67 %: H₂O.

Die Viskosität der Lösung beträgt etwa 700 Poise.

Die Einrichtung weist oberhalb des Eintropfgefässes(2) einen Träger(3) auf, an dem eine Mehrzahl von Zylinder-Druckkolbenanordnungen(4) befestigt sind. Speziell sind die Zylinder(5) der Zylinder-Druckkolbenanordnungen(4) an dem Träger(3) befestigt.

Die Druckkolben(6) der Zylinder-Druckkolbenanordnungen(4) weisen Kolbenstangen(7) auf, deren oberen Ende an einer gemeinsamen Antriebsstange(8) festgelegt sind. Die Antriebsstange(8) ist an dem Träger(3) in Richtung der Pfeile(a,b) verschieblich gelagert und mittels Druckfedern(9) in Richtung des Pfeiles(a) belastet.

Der Antriebsstange(8) ist eine Kurvenscheibe(10) zugeordnet, die an ihrem Umfang vier Höcker(11) aufweist. Mittels eines nicht näher dargestellten Elektromotors ist die Kurvenscheibe(10) um ihre Achse(12) rotierbar.

An den Vorratsbehälter(1) ist eine Rohrleitung(13) angeschlossen. Diese ist über Schlauchstücke(14) mit den Zylindern(5) verbunden. Die Zylinder(5) weisen Düsen(15) auf. In jede der Düsen(15) mündet eines der Schlauchstücke(14). Die Düsen(15) sind mit Düsenöffnungen (16) versehen, welche oberhalb der im Eintropfgefäß(2) befindlichen Lösung liegen.

Die Arbeitsweise der beschriebenen Einrichtung ist etwa folgende:

Rotiert die Kurvenscheibe(10), dann wird entsprechend der Anzahl der Höcker(11) an ihrem Umfang und der Drehzahl die Antriebsstange(8) zyklisch in Richtung des Pfeiles (b) gegen die Kraft der Druckfeder(9) gedrückt. Der sich dabei jeweils einstellende Hub der Druckkolben(6) entspricht der Differenz zwischen dem Radius(R) bei den Höckern(11) und dem Radius(r) bei den Vertiefungen(17) der Kurvenscheibe(10).

In der Rohrleitung(13) steht Schlicker aus dem Vorratsbehälter(1) unter Druck an. Dadurch ist durch die Schlauchstücke(14) Schlicker in die Zylinder(5) gedrückt. Bei jedem Hub der Antriebsstange(8) in Richtung des Pfeiles(b) und damit der Druckkolben(6) werden aus den Düsen(15) der Zylinder(5) Schlickerportionen ausgedrückt. Diese fallen unter der Schwerkraft in die Lösung des Eintropfgefässes(2) und nehmen dabei kugelförmige Gestalt an. In der Lösung gelieren die kugelförmigen Tropfen und sinken nach unten ab. Das Gelieren wird durch die Reaktion des CaCL₂'s der Lösung mit dem Ammoniumalginate des Schlickers erreicht. Dabei entsteht eine unlösliche Außenschicht aus Kalziumalginat, durch die Wasser osmotisch durchtritt und zum Verfestigen der Kugeln führt.Die verfestigten Kugeln werden dann in üblicher Weise vom Grund des Eintropfgefässes(2) abgezogen und gebrannt. Im wesentlichen bestimmt der Hub der Druckkolben(6) die Größe des Kugeldurchmessers.

Wird ein kleiner Kugeldurchmesser gewünscht, dann wird eine Kurvenscheibe(10) verwendet, bei der die Differenz zwischen dem Radius(R) und dem Radius(r) kleiner ist. Sollen größere Kugeln hergestellt werden, dann wird eine Kurvenscheibe(10) verwendet, bei der die Differenz zwischen dem Radius(R) und dem Radius(r) größer ist. Die Kurvenscheibe(10) läßt sich zur Erzeugung von Kugeln mit dem gewünschten Durchmesser einfach auswechseln. Es lassen sich Kugeln herstellen, die je nach der verwendeten Kurvenscheibe einen Durchmesser zwischen 3 mm und 12 mm haben. Durch die Anzahl der Hübe pro Zeiteinheit bzw. die Anzahl der Höcker(11) auf der Kurvenscheibe(10) und deren Drehzahl läßt sich die Herstellungsgeschwindigkeit wählen. Es ist damit möglich, eine vergleichsweise große Herstellgeschwindigkeit einzustellen.

## Patentansprüche

1. Verfahren zur Herstellung von Kugeln aus keramischem Material, wobei das Material in fließfähigem Zustand als Schlicker aus einem Schlicker-Vorratsbehälter zu wenigstens einer Düse gefördert wird und aus dieser tropfenweise in eine Lösung gelangt, in der es unter Gelieren absinkt,
dadurch gekennzeichnet,
daß Schlicker aus dem Vorratsbehälter in einen Zylinder einer Zylinder-Druckkolbenanordnung eingebracht wird und daß der Druckkolben in einem Hub eine dem gewünschten Kugeldurchmesser entsprechende Materialmenge durch die Düse ausdrückt.

2. Einrichtung zur Herstellung von Kugeln aus einem keramischen Material, die zwischen einem Schlicker-Vorratsbehälter(1) und einem Eintropfgefäß(2) angeordnet ist, mit wenigstens einer Düse, durch die Schlicker tropfenweise in eine Lösung des Eintropfgefässes(2) gelangt, in der die Materialtropfen unter Gelieren absinken,
dadurch gekennzeichnet,
daß wenigstens eine Zylinder-Druckkolbenanordnung(4) vorgesehen ist, daß der Zylinder(5) der Zylinder-Druckkolbenanordnung(4) aus dem Schlicker-Vorratsbehälter (1) nachfüllbar ist und daß der Druckkolben(6) der Zylinder-Druckkolbenanordnung(4) von einem Antriebsglied (10) in einem wählbaren Hub beweglich ist, durch den er die einem gewünschten Kugeldurchmesser entsprechende Materialmenge aus dem Zylinder(5) durch die Düse(15) ausdrückt.

3. Einrichtung nach Anspruch 2,
dadurch gekennzeichnet,
daß das Antriebsglied eine Kurvenscheibe(10) ist, die von einem Motor rotierbar ist.

4. Einrichtung nach Anspruch 2 oder 3,
dadurch gekennzeichnet,
daß die Druckkolben(6) mehrerer Zylinder-Druckkolbenanordnungen(4) an einer gemeinsamen Antriebsstange(8) befestigt sind, die von der Kurvenscheibe(10) in dem Hub beweglich ist.

5. Einrichtung nach einem der vorhergehenden Ansprüche,
dadurch gekennzeichnet,
daß Schlicker aus dem Vorratsbehälter(1) in die Zylinder (5) unter Druck eingedrückt wird.

## Claims

1. Method of manufacturing balls of ceramic material in which the material is conveyed in a flowable state in the form of a slurry from a slurry supply container to at least one nozzle and flows out of the latter in drops into a solution in which it sinks whilst coagulating, characterised in that the slurry is introduced from the supply container into a cylinder of a cylinder-piston arrangement and that the piston forces an amount of material corresponding to the desired ball diameter through the nozzle in one stroke.

2. Apparatus for manufacturing balls from a ceramic material, which is disposed between a slurry supply container (1) and a drop vessel (2), including at least one nozzle through which slurry flows in drops into a solution in the drop vessel (2) in which the material drops sink whilst coagulating, characterised in that at least one cylinder-piston arrangement (4) is provided, that the cylinder (5) of the cylinder-piston arrangement (4) is refillable from the slurry supply container (1) and that the piston (6) of the cylinder-piston arrangement (4) is movable by a drive element (10) in a selectable stroke by means of which it forces the amount of material corresponding to a desired ball diameter out of the cylinder (5) through the nozzle (15).

3. Apparatus as claimed in Claim 2, characterised in that the drive element is a cam disc (10) which is rotatable by a motor.

4. Apparatus as claimed in Claim 2 or 3, characterised in that the pistons (6) of a plurality of cylinder-piston arrangements (4) are connected to a common drive rod (8) which is movable by the cam disc (10) in the stroke.

5. Apparatus as claimed in one of the preceding claims, characterised in that slurry is forced out of the supply container (1) into the cylinders (5) under pressure.

## Revendications

1. Procédé pour la fabrication de billes en matériau céramique, le matériau étant amené à l'état fluide en tant que barbotine depuis un réservoir de barbotine à au moins une buse pour parvenir de là goutte à goutte dans une solution dans laquelle il s'enfonce en géléifiant,
caractérisé par le fait
que la barbotine est introduite à partir du réservoir dans un cylindre d'un agencement cylindre-piston de refoulement et que le piston de refoulement expulse en une course, à travers la buse, une quantité de matériau correspondant au diamètre désiré des billes.

2. Dispositif pour la fabrication de billes en matériau céramique, ce dispositif étant intercalé entre un réservoir de barbotine (1) et une cuve de géléification (2) et comprenant au moins une buse à travers laquelle la barbotine parvient goutte à goutte dans une solution qui est contenue dans la cuve de géléification (2) et dans laquelle les gouttes de matériau s'enfoncent en géléifiant,
caractérisé par le fait
qu'il comprend au moins un agencement cylindre-piston de refoulement (4), que le cylindre (5) de l'agencement cylindre-piston de refoulement (4) peut être rechargé à partir du réservoir de barbotine (1), et que le piston de refoulement (6) de l'agencement cylindre-piston de refoulement (4) est déplacable sous l'action d'un organe d'entraînement (10) avec une course susceptible d'être sélectionnée, sur laquelle il expulse du cylindre, à travers la buse (15), une quantité de matériau correspondant au diamètre désiré des billes.

3. Dispositif suivant la revendication 2,
caractérisé par le fait
que l'organe d'entraînement est une came (10) qui est entraînée en rotation par un moteur.

4. Dispositif suivant la revendication 2 ou 3,
caractérisé par le fait
que les pistons de refoulement (6) de plusieurs agencements cylindre-piston de refoulement (4) sont fixés à une tige d'entraînement (8) commune déplaçable avec ladite course par la came (10).

5. Dispositif suivant l'une des revendications précédentes,
caractérisé par le fait
que la barbotine est refoulée sous pression du réservoir (1) dans les cylindres (5).
